# EUROPÄISCHE PATENTSCHRIFT

(11) **EP 3 829 955 B1**
(45) Veröffentlichungstag und Bekanntmachung des Hinweises auf die Patenterteilung: **06.11.2024**
(21) Anmeldenummer: 19749638.3
(22) Anmeldetag: 26.07.2019
(51) Int. Cl.: B62D 1/181, B60R 21/16

(54) **POSITIONSERKENNUNG FÜR EINE LENKSÄULE EINES KRAFTFAHRZEUGES**
POSITION DETECTION FOR A STEERING COLUMN OF A MOTOR VEHICLE
DÉTECTION DE POSITION POUR UNE COLONNE DE DIRECTION D'UN VÉHICULE AUTOMOBILE

(30) Priorität: 31.07.2018 DE 102018118506; 01.04.2019 DE 102019108466
(43) Veröffentlichungstag der Anmeldung: 09.06.2021
(73) Patentinhaber: thyssenkrupp Presta AG, 9492 Eschen (LI); thyssenkrupp AG, 45143 Essen (DE)
(72) Erfinder: KREUTZ, Daniel, 6800 Feldkirch (AT); SEN, Sedat, 9435 Heerbrugg (CH); WILLI, Andreas, 6923 Lauterach (AT); PICHONNAT, Christian, Indianapolis, Indiana 46236 (US); GEISELBERGER, Thomas, 9014 St. Gallen (CH); YOHO, Justin, Westfield, Indiana 46062 (US)
(74) Vertreter: thyssenkrupp Intellectual Property GmbH
(86) Internationale Anmeldenummer: PCT/EP2019/070145
(87) Internationale Veröffentlichungsnummer: WO 2020/025466

(56) Entgegenhaltungen:
- EP-A2- 1 632 418
- WO-A1-92/16403
- DE-A1- 102017 207 561
- DE-A1- 19 962 494
- DE-B4- 102004 044 472
- US-A- 5 419 215
- US-A1- 2016 375 927
- US-A1- 2018 086 378
- US-B2- 6 749 222

## Beschreibung

Die vorliegende Erfindung betrifft eine Lenksäule für ein Kraftfahrzeug mit den Merkmalen des Oberbegriffs des Anspruchs 1 und Verfahren zum Betreiben einer solchen Lenksäule.

Die in Kraftfahrzeugen eingebauten Lenksäulen sind größtenteils verstellbar, wobei es vorgesehen sein kann, dass die Lenksäule motorisch verstellbar ist. Für zukünftige hochautomatisierte Fahrzeuge welche manuell und autonom gefahren werden können, bietet eine Lenksäule mit großem Verstellweg den Vorteil, dass das Lenkrad im autonomen Modus vom Fahrer weggefahren werden kann. Dadurch erhält der Fahrer mehr Platz für andere Aktivitäten. Um den Fahrer in beiden Fahrzuständen zu schützen, bedarf es spezifischer Airbagsysteme, welche den Fahrer sowohl mit eingefahrenem als auch mit ausgefahrenem Lenkrad optimal schützen. Hierfür gibt es Ansätze, bei denen in Abhängigkeit von der Lenkradposition verschiedene Airbagsysteme "aktiviert" werden. Um für die unterschiedlichen Lenkradpositionen spezifische Airbagsysteme zu aktivieren, muss das Fahrzeug zu jeder Zeit wissen, in welcher Position sich das Lenkrad bzw. die Lenksäule befindet. Für die Lenksäule bedeutet dies, dass zumindest die Position der Längenverstellung sicher erfasst und an das Fahrzeug gesendet werden muss. Die Positionserfassung fällt aufgrund der sicherheitsabhängigen Funktion unter die Klassifizierung der funktionalen Sicherheit (ASIL). Die Lenkradposition wird herkömmlicherweise über die Rotation des Motorrotors von der Antriebseinheit des Verstellantriebs erfasst und muss nach jedem Spannungsverlust neu angelernt werden. Das ist sicherheitstechnisch problematisch.

Aus dem Stand der Technik, der Offenlegungsschrift US 2018/086378 A1, ist eine Lenksäule mit einer Positionserkennung vorbekannt, bei der die Verstellposition der Stelleinheit relativ zur Trageinheit mittels eines separaten Getriebes bestimmt werden kann.

Die Offenlegungsschrift DE 10 2004 044 472 A1 zeigt eine motorisch verstellbare Lenksäule, die ein Magnetsensorsystem aufweist, das ein erstes Element am verstellbaren Teil der Lenksäule und ein damit zusammenwirkendes zweites ortsfestes Element aufweist, wobei die beiden Elemente des Sensorsystems nur innerhalb des Verstellweges der Lenksäule ein Sensor-Signal erzeugen, das einen Betrieb des Verstellantriebs zulässt. Bei einer Annäherung der mechanischen Endanschlage der Lenksäule, wird ein zweites Signal erzeugt, das ein Abschalten des Verstellantriebs hervorruft.

Aus der DE 199 62 494 A1 ist eine elektrische Lenksäulenvorrichtung bekannt, mit der die Position eines Lenkrades elektrisch eingestellt werden kann. Mit einer Positionserfassungseinrichtung kann dabei ein Betrag einer Rotation eines für das Einstellen genutzten Elektromotors erfasst werden, um darüber eine Position des Lenkrades zu ermitteln.

Zudem ist aus der WO 92/16403 A1 eine Lenksäule bekannt, die bezüglich des Neigungswinkels verstellt werden kann. Die Ansteuerung erfolgt dabei über eine Steuereinheit, die von einem Signalgeber ein Signal bezüglich der aktuellen Position der Lenksäule empfängt.

Weiter ist aus der EP 1 632 418 A2 eine Lenksäule bekannt, bei der sich bei einem Fahrzeugunfall ein erster Teil der Lenksäule relativ zu einem zweiten Teil der Lenksäule zum Absorbieren von Energie entlang eines vorgegebenen Weges bewegen kann. Die Relativposition bei dieser Bewegung kann dabei mittels eines Sensors überwacht werden, um über eine Steuereinheit auf Mittel zur Energieabsorbierung einzuwirken.

Aus der US 2016/0375927 A1 ist ferner eine Lenksäule bekannt, die zwischen einer Verstauposition und einer Bedienposition verstellt werden kann. Die Lenksäule umfasst dabei einen Airbag, wobei der Airbag beim Auslösen unterschiedliche Größen einnimmt, abhängig davon, ob die Lenksäule in der Verstauposition oder in der Bedienposition ist.

Es ist eine Aufgabe der vorliegenden Erfindung, eine Lenksäule für ein Kraftfahrzeug mit einer zuverlässigen Positionserkennungsvorrichtung und ein Verfahren zum Betreiben einer solchen Lenksäule anzugeben.

Diese Aufgabe wird durch eine Lenksäule mit den Merkmalen des Anspruchs 1 und Verfahren zum Betreiben einer solchen Lenksäule mit den Merkmalen der Ansprüche 9, 11 und 13 gelöst. In den Unteransprüchen sind vorteilhafte Weiterbildungen der Erfindung genannt.

Demnach ist eine Lenksäule für ein Kraftfahrzeug, umfassend eine mit dem Chassis des Kraftfahrzeugs verbindbare Trageinheit und eine an dieser gehaltenen Stelleinheit, welche eine Lenkwelle drehbar lagert, vorgesehen, wobei die Stelleinheit gegenüber der Trageinheit verstellbar ist, und wobei die Lenksäule eine Positionserkennungsvorrichtung zur Ermittlung der Position der Stelleinheit relativ zur Trageinheit aufweist.

Die Positionserkennung erfolgt auf einfache und günstige Weise, die es erlaubt, wirksame Maßnahmen zur Erhöhung der Sicherheit zu realisieren. Die Positionserkennungsvorrichtung bietet somit die Möglichkeit, die relative örtliche Lage der Stelleinheit in Bezug auf die Trageinheit zu bestimmen.

Daher ist es unerheblich, ob die Verstellung zwischen der Stelleinheit und der Trageinheit manuell, mechanisch, pneumatisch, hydraulisch oder elektrisch erfolgt.

Bevorzugt ist die Stelleinheit gegenüber der Trageinheit entlang eines Verstellwegs verstellbar.

Bevorzugt ist die Stelleinheit gegenüber der Trageinheit in Längsverstellrichtung entlang eines ersten Verstellwegs der Lenksäule und/oder in Höhenverstellrichtung entlang eines zweiten Verstellwegs der Lenksäule verstellbar. Vorzugsweise weist die Positionserkennungsvorrichtung wenigstens eine Positionssensoreinheit auf, die ein erstes Element und ein damit zusammenwirkendes zweites Element aufweist, wobei sich das erste Element gegenüber dem zweiten Element bei Verstellung der Stelleinheit gegenüber der Trageinheit bewegt.

Bevorzugt kann die Positionserkennungsvorrichtung eine Steuereinheit umfassen, die die elektrischen Signale der Positionssensoreinheit weiterverarbeitet und die Position der Stelleinheit relativ zur Trageinheit bestimmt. Bevorzugt wird die wenigstens eine Positionssensoreinheit die Verstellung entlang des ersten und/oder zweiten Verstellwegs über mindestens 80% des entsprechenden Verstellwegs kontinuierlich detektiert.

Bevorzugt wird durch die wenigstens eine Positionssensoreinheit die Verstellung der Stelleinheit relativ zur Trageinheit kontinuierlich entlang des Verstellwegs detektiert. Es findet somit nicht nur wie im Stand der Technik die Ermittlung von einzelnen Positionen der Stelleinheit, wie beispielsweise der Endpositionen statt, sondern es kann die Position, also die genaue Ortslage der Stelleinheit relativ zur Trageinheit über den gesamten Verstellweg der Stelleinheit relativ zur Trageinheit bestimmt werden.

In einer bevorzugten Ausführungsform weist die Lenksäule einen Verstellantrieb zur Verstellung in Längsverstellrichtung und/oder einen Verstellantrieb zur Verstellung in Höhenverstellrichtung auf. In einer vorteilhaften Weiterbildung umfasst der Verstellantrieb einen Elektromotor und eine Gewindestange mit einem Außengewinde, welches mit einem Innengewinde einer Spindelmutter des Verstellantriebs in Eingriff steht. Es kann vorgesehen sein, dass die Gewindestange durch den Elektromotor rotatorisch antreibbar ist, wobei die Spindelmutter drehfest mit der Trageinheit oder der Stelleinheit gekoppelt ist, wobei durch die Rotation der Gewindestange die Spindelmutter translatorisch relativ zur Gewindestange verlagert wird. Alternativ kann es vorgesehen sein, dass die Spindelmutter durch den Elektromotor rotatorisch antreibbar ist, wobei die Gewindestange drehfest mit der Trageinheit oder der Stelleinheit gekoppelt ist, wobei durch die Rotation der Spindelmutter die Gewindestange translatorisch relativ zur Spindelmutter verlagert wird. Durch diese Verlagerung der Spindelmutter relativ zur Gewindespindel wird die Verstellung realisiert. Dabei ist es bevorzugt, wenn das zweite Element der wenigstens einen Positionssensoreinheit an der Gewindestange befestigt ist und das erste Element relativ zur Spindelmutter ortsfest gehalten ist, sodass die wenigstens eine Positionssensoreinheit die Lage der Spindelmutter auf der Gewindestange ermittelt. Aus dieser Information kann dann die Position der Stelleinheit gegenüber der Trageeinheit berechnet werden. Die Berechnung kann bevorzugt mittels der Steuereinheit erfolgen.

Bevorzugt kann das zweite Element durch die Gewindestange gebildet werden.

Vorzugsweise sind das erste Elemente und das zweite Element der wenigstens einen Positionssensoreinheit relativ zueinander linear verschiebbar geführt. Die Verschiebung, also die Verlagerung des ersten Elements relativ zu dem zweiten Element erfolgt rein translatorisch. Mit anderen Worten erfolgt die Verschiebung nur entlang eines Freiheitsgrads, eine Bewegung entlang der anderen beiden translatorischen Freiheitsgrade und der drei rotatorischen Freiheitsgrade ist gesperrt.

Die Positionssensoreinheit umfasst bevorzugt einen Sensor, bei dem das erste Element ausschließlich gleitend über das zweite Element geführt ist. Somit weist weder das erste Element noch das zweite Element drehende Teile auf, die miteinander in Eingriff stehen.

Die Positionssensoreinheit umfasst bevorzugt einen berührungslosen Sensor. Das erste Element und das zweite Element stehen mechanisch nicht im Eingriff miteinander. Bevorzugt weist weder das erste Element noch das zweite Element drehende Teile auf, die miteinander in Eingriff stehen.

Der berührungslosen Sensor umfasst bevorzugt elektronische Halbleiter, die ein energiereiches Feld oder einen Strahl erzeugen, dies erfolgt beispielsweise durch das eine der beiden Elemente, wobei das andere der beiden Elemente eine Störung innerhalb des Feldes bzw. des Strahls detektiert.

In einer besonderen und bevorzugten Ausführungsform weisen das erste Element und das zweite Element einen Abstand zueinander auf, wobei dieser Abstand grösser Null ist. Mit anderen Worten steht das erste Element nicht in Kontakt mit dem zweiten Element. Jedoch kann es vorgesehen sein, dass das erste und das zweite Element eine mechanische Führung aufweisen, die das erste Element relativ zu dem zweiten Element führt. Diese Führung kann durchaus einen Kontakt zueinander aufweisen, ohne den Begriff des berührungslosen Sensors im Sinne der Erfindung zu verlassen.

Der berührungslose Sensor bietet gegenüber dem Stand der Technik den Vorteil, dass keine beweglichen Teile, die blockieren, verschleißen oder brechen können, benötigt werden, wodurch die Lebensdauer erhöht wird und gleichzeitig die Kosten reduziert werden können. Weiterhin kann die Messgenauigkeit gesteigert werden, wobei dies mit einer Erhöhung der Sicherheit einhergeht.

In einer vorteilhaften Ausführungsform weist die Positionssensoreinheit einen Linearsensor zur Erzeugung eines elektrischen Steuersignals in Abhängigkeit von der Relativposition des ersten Elements relativ zum zweiten Element auf. Der Sensor ist vorzugsweise als Absolutsensor ausgebildet. Der Absolutsensor bietet den Vorteil, dass nach der Wiederinbetriebnahme, beispielsweise nach einer unbestromten Situation keine Bezugsdaten erforderlich sind und somit keine Kalibrierfahrt beispielsweise zwischen den Endlagen erforderlich ist, um den Betrieb erfolgreich wieder aufzunehmen.

Der Sensor kann ein induktiver, magnetischer, optischer, akustisch oder kapazitiver Sensor sein.

Die Positionssensoreinheit kann auf der Außenseite oder der Innenseite der Stelleinheit angeordnet sein.

Die Stelleinheit der Lenksäule weist bevorzugt ein Mantelrohr auf, das die Lenkwelle drehbar lagert.

Erfindungsgemäß ist die Positionserkennungsvorrichtung als redundantes System ausgelegt, das zwei voneinander unabhängige Positionssensoreinheiten zur Messung der Position der Stelleinheit gegenüber der Trageinheit aufweist. Dabei weisen die beiden redundanten Positionssensoreinheiten bevorzugt unterschiedliche Messmethoden auf. Dank der redundanten Anordnung bzw. dank der unterschiedlichen voneinander abweichenden Messmethoden kann die Sicherheit weiter gesteigert werden.

Es ist vorteilhaft, wenn die Lenksäule eine Positionssensoreinheit zur Ermittlung der Längsverstellposition und/oder eine Positionssensoreinheiten zur Ermittlung der Höhenverstellposition aufweist.

Vorzugsweise weist die Lenksäule zur Verstellung in Längsverstellrichtung und/oder Höhenverstellrichtung einen motorischen Verstellantrieb auf.

Dabei ist es vorteilhaft, wenn die Lenksäule einen ersten Verstellantrieb für die Längsverstellung und einen zweiten Verstellantrieb für die Höhenverstellung aufweist.

In einer vorteilhaften Ausführungsform sind bei der Längsverstelleinrichtung das zweite Element der Positionssensoreinheit an einem Ende der Gewindestange und das erste Element an dem äußeren Mantelrohr befestigt. Allgemein ausgedrückt, befindet sich bevorzugt bei axialer Verstellung das erste Element an einer dabei ortsfesten Komponente und das zweite Element an einer dabei beweglichen Komponente.

Es ist vorteilhaft, wenn das zweite Element eine metallische Komponente aufweist und das erste Element eine sich parallel zur Längsachse auf der Außenseite des äußeren Mantelrohrs erstreckende Flachspule umfasst, wobei durch Bewegung des zweiten Elements über die Flachspule eine kontinuierliche Veränderung der Induktivität messbar ist.

Es kann weiterhin vorgesehen sein, dass bei der Höhenverstelleinrichtung das zweite Element der Positionserkennungsvorrichtung an der Gewindestange und das erste Element der Positionserkennungsvorrichtung an dem Gehäuse des Verstellantriebs, welches ortsfest zur Spindelmutter, angeordnet ist. Allgemein ausgedrückt, befindet sich bevorzugt bei der Höhenverstellung das erste Element an einer dabei ortsfesten Komponente und das zweite Element an einer dabei beweglichen Komponente. Grundsätzlich ist es auch denkbar und möglich, dass das erste Element an der beweglichen Komponente und das zweite Element an der ortsfesten Komponente angeordnet ist.

Die erfindungsgemäße Positionserkennungsvorrichtung kann auch bei manuellverstellbaren Lenksäulen zum Einsatz kommen, wobei eine solche manuellverstellbare Lenksäule eine Fixiereinrichtung aufweist, die zwischen einer Freigabestellung, in der die Stelleinheit relativ zur Trageinheit verstellbar ist, und einer Fixierstellung, in der die Stelleinheit relativ zur Trageinheit festgesetzt ist, umschaltbar ist.

Weiterhin ist ein Verfahren zum Betreiben einer erfindungsgemäß ausgebildeten Lenksäule, umfassend eine mit dem Chassis des Kraftfahrzeugs verbindbare Trageinheit und eine an dieser gehaltenen Stelleinheit, welche eine Lenkwelle drehbar lagert, vorgesehen, wobei die Stelleinheit gegenüber der Trageinheit mittels eines motorischen Verstellantriebs verstellbar ist, und wobei die Lenksäule eine Positionserkennungsvorrichtung zur Ermittlung der Position der Stelleinheit relativ zur Trageinheit aufweist und das Verfahren folgende Verfahrensschritte umfasst:
- Ermitteln einer Position der Stelleinheit relativ zur Trageinheit mittels der Positionserkennungsvorrichtung;
- Berechnen einer Verstellgeschwindigkeit aus dem ermittelten Positionssignal; und
- Wenn die Verstellgeschwindigkeit einen vorgegeben Grenzwert unterschreitet, Stoppen der Verstellung der Lenksäule.

Bevorzugt umfasst die Lenksäule eine Steuereinheit. Diese Steuereinheit wirkt mit der Positionserkennungsvorrichtung zusammen und ist derart ausgelegt, das erfindungsgemäße Verfahren durchzuführen.

Bevorzugt ist die Stelleinheit gegenüber der Trageinheit in Längsverstellrichtung entlang eines ersten Verstellwegs der Lenksäule mittels eines ersten motorischen Verstellantriebs und/oder in Höhenverstellrichtung entlang eines zweiten Verstellwegs der Lenksäule mittels eines zweiten motorischen Verstellantriebs verstellbar.

Bevorzugt kann eine Verstellgeschwindigkeit aus dem ermittelten Positionssignal in Längsverstellrichtung und eine Verstellgeschwindigkeit aus dem ermittelten Positionssignal in Höhenverstellrichtung berechnet werden. Alternativ oder zusätzlich ist es denkbar und möglich mittels des Superpositionsprinzips eine Gesamtverstellgeschwindigkeit zu ermitteln.

Das Verfahren erlaubt mit einfachen Mitteln eine Blockade oder Kollision der Verstelleinrichtung bzw. der Stelleinheit zu detektieren.

Das Verfahren kann folgende weitere Verfahrensschritte umfassen:
- Bestimmen einer Bestromung des ersten und/oder zweiten Verstellantriebs,
- Überprüfen ob ein vorbestimmter Grenzwert der Bestromung überschritten ist,
- Bei Überschreiten des Grenzwertes, Stoppen der Verstellung der Lenksäule.

Unter der Bestimmung der Bestromung kann bevorzugt das Ermitteln des elektrischen Stroms mittels eines Amperemeters verstanden werden.

Dies stellt eine weitere Möglichkeit dar, das Blockieren der Verstellung oder eine Kollision zu detektieren.

Weiterhin ist ein Verfahren zum Betreiben einer erfindungsgemäß ausgebildeten Lenksäule, umfassend eine mit dem Chassis des Kraftfahrzeugs verbindbare Trageinheit und eine an dieser gehaltenen Stelleinheit, welche eine Lenkwelle drehbar lagert, vorgesehen, wobei die Stelleinheit gegenüber der Trageinheit verstellbar ist, und die Lenksäule eine Positionserkennungsvorrichtung zur Ermittlung der Position der Stelleinheit relativ zur Trageinheit und ein Crashsystem mit wenigstens zwei an der Lenksäule angeordneten Energieabsorptions-einrichtungen aufweist, wobei das Verfahren folgende Verfahrensschritte umfasst:
- Ermitteln einer Position der Stelleinheit relativ zur Trageinheit mittels der Positionserkennungsvorrichtung im Crashfall;
- Steuern der wenigstens zwei an der Lenksäule angeordneten Energieabsorptionseinrichtungen in Abhängigkeit von der ermittelten Position, wobei zumindest eine der Energieabsorptionseinrichtungen in Betrieb gesetzt wird.

Bevorzugt umfasst die Lenksäule eine Steuereinheit. Diese Steuereinheit wirkt mit der Positionserkennungsvorrichtung zusammen und ist derart ausgelegt, das erfindungsgemäße Verfahren durchzuführen.

Bevorzugt ist die Stelleinheit gegenüber der Trageinheit in Längsverstellrichtung entlang eines ersten Verstellwegs der Lenksäule mittels eines ersten motorischen Verstellantriebs und/oder in Höhenverstellrichtung entlang eines zweiten Verstellwegs der Lenksäule mittels eines zweiten motorischen Verstellantriebs verstellbar.

Bevorzugt kann eine Verstellgeschwindigkeit aus dem ermittelten Positionssignal in Längsverstellrichtung und eine Verstellgeschwindigkeit aus dem ermittelten Positionssignal in Höhenverstellrichtung berechnet bzw. ermittelt werden. Alternativ oder zusätzlich ist es denkbar und möglich, mittels des Superpositionsprinzips eine Gesamtverstellgeschwindigkeit zu ermitteln.

Es können somit die Energieabsorptionseinrichtungen angepasst an die Stellung der Lenkwelle angesteuert werden, wodurch die Effektivität der Energieabsorption deutlich verbessert wird.

Bevorzugt sind die Energieabsorptionseinrichtungen zwischen der Trageinheit und der Stelleinheit und/oder zwischen der Trageinheit und dem Chassis des Fahrzeugs angeordnet.

Bevorzugt umfasst jede Energieabsorptionseinrichtung ein Energieabsorptionselement, welches im Betrieb der jeweiligen Energieabsorptionseinrichtung plastisch deformiert wird.

Als Energieabsorptionselement können beispielsweise folgende Elemente zum Einsatz kommen: ein Biegedraht, ein Biegestreifen, eine Biegelasche, eine Biegereißlasche, ein Streifen, der durch ein Deformationsorgan hindurchbewegt wird, oder ein Langloch, welches durch ein Deformationsorgan aufgeweitet wird.

Solche Energieabsorptionselemente sind dem Fachmann hinlänglich aus dem Stand der Technik bekannt und werden daher an dieser Stelle nicht weiter ausgeführt. Ebenfalls ist die vorangehende Auflistung nicht abschließend, sondern lediglich eine exemplarische Auflistung von möglichen Ausführungen. Vorzugsweise weist die Lenksäule zur Aktivierung der wenigstens zwei Energieabsorptionseinrichtungen einen Pyroschalter oder einen Hubmagneten auf. Durch die Schaltung des Pyroschalters oder des Hubmagneten werden die Energieabsorptionseinrichtungen in Betrieb gesetzt.

Zudem ist ein Verfahren zum Betreiben einer erfindungsgemäß ausgebildeten Lenksäule, umfassend eine mit dem Chassis des Kraftfahrzeugs verbindbare Trageinheit und eine an dieser gehaltenen Stelleinheit, welche eine Lenkwelle drehbar lagert, vorgesehen, wobei die Stelleinheit gegenüber der Trageinheit verstellbar ist, wobei die Lenksäule verstaubar ist, und wobei die Lenksäule eine Positionserkennungs-vorrichtung zur Ermittlung der Position der Stelleinheit relativ zur Trageinheit und ein Crashsystem mit einem Airbagsystem aufweist, und das Verfahren folgende Verfahrensschritte umfasst:
- Ermitteln einer Position der Stelleinheit relativ zur Trageinheit mittels der Positionserkennungsvorrichtung im Crashfall;
- Steuern des Airbagsystems in Abhängigkeit von der ermittelten Position.

Bevorzugt umfasst die Lenksäule eine Steuereinheit. Diese Steuereinheit wirkt mit der Positionserkennungsvorrichtung zusammen und ist derart ausgelegt, das erfindungsgemäße Verfahren durchzuführen.

Bevorzugt ist die Stelleinheit gegenüber der Trageinheit in Längsverstellrichtung entlang eines ersten Verstellwegs der Lenksäule mittels eines ersten motorischen Verstellantriebs und/oder in Höhenverstellrichtung entlang eines zweiten Verstellwegs der Lenksäule mittels eines zweiten motorischen Verstellantriebs verstellbar.

Bevorzugt kann eine Verstellgeschwindigkeit aus dem ermittelten Positionssignal in Längsverstellrichtung und eine Verstellgeschwindigkeit aus dem ermittelten Positionssignal in Höhenverstellrichtung berechnet bzw. ermittelt werden. Alternativ oder zusätzlich ist es denkbar und möglich mittels des Superpositionsprinzips eine Gesamtverstellgeschwindigkeit zu ermitteln.

Das Airbagsystem kann somit angepasst an die Stellung der Lenksäule angesteuert werden, wodurch der Fahrer im Crashfall noch besser geschützt wird. Eine verstaubare Lenksäule ist zwischen einer ausgefahrenen Position, in dem die Steuerung des Kraftfahrzeugs durch den Fahrer erfolgt, also das Kraftfahrzeug manuell gesteuert wird, und einer zurückgezogenen Position, in der das Kraftfahrzeug autonom ohne Wirkeingriffe des Fahrers gesteuert wird, verstellbar.

Vorzugsweise ist das Airbagsystem dazu ausgelegt, einen Fahrer im Crashfall in einem autonomen Fahrmodus mit verstauter Lenksäule und in einem manuellen oder halbautonomen Fahrmodus zu schützen, wobei das Verfahren folgende weitere Schritte umfasst:
- Erkennen, dass die Lenksäule verstaut ist;
- Steuern des Airbagsystems angepasst an die verstaute Lenksäule.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine räumliche Ansicht einer Lenksäule für ein Lenksystem eines Kraftfahrzeuges in ausgefahrener Stellung,
- Fig. 2:: eine räumliche Ansicht der Lenksäule aus Fig. 1 in eingefahrener Stellung,
- Fig. 3:: eine zweite räumliche Ansicht der Lenksäule aus Fig. 1,
- Fig. 4:: einen Längsschnitt durch eine Lenksäule mit innenliegender Positionssensoreinheit,
- Fig. 5:: eine räumliche Ansicht einer Lenksäule mit Höhenverstellantrieb und Positionssensoreinheit,
- Fig. 6:: eine weitere räumliche Ansicht der Lenksäule aus Figur 5,
- Fig. 7:: eine räumliche Ansicht einer Lenksäule mit Energieabsorptionseinrichtung für einen Crashfall, sowie
- Fig. 8:: ein Flussdiagramm zur Steuerung einer Lenkung im Crashfall.

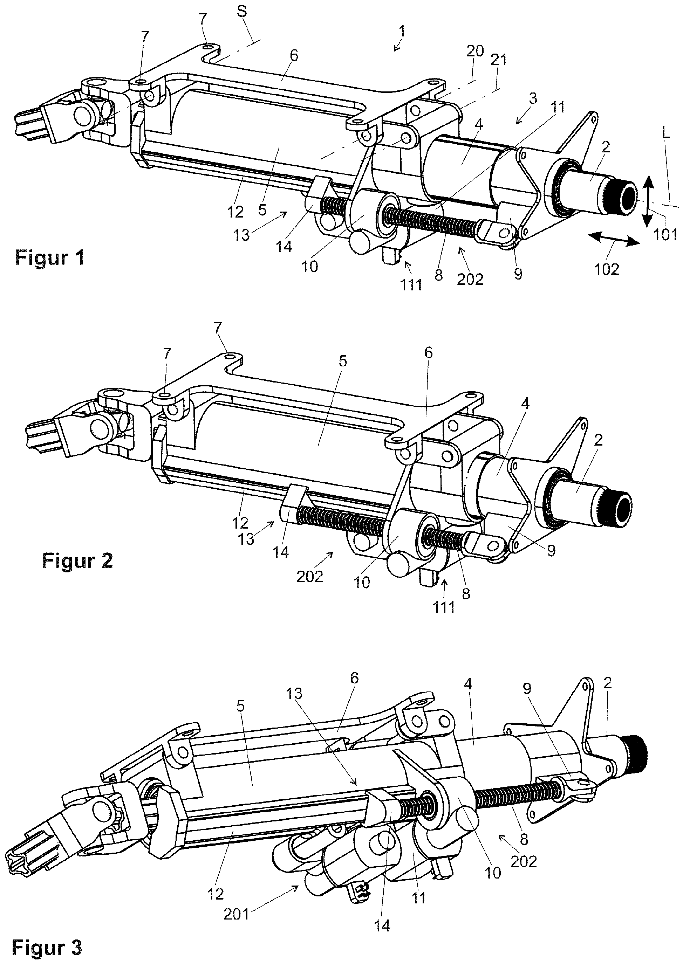

Die Figuren 1 bis 3 veranschaulichen eine Lenksäule 1 für ein Kraftfahrzeug, aufweisend eine Lenkwelle 2, die um ihre Längsachse L, die auch als Drehachse bezeichnet wird, drehbar in einer Lenkwellenlagereinheit 3, aufweisend ein inneres Mantelrohr 4, gelagert ist. Das innere Mantelrohr 4 ist in einem äußeren Mantelrohr 5 entlang der Längsachse L der Lenkwelle 2 verschiebbar geführt. Das äußere Mantelrohr 5 ist um eine Schwenkachse S in einem Halteteil 6 schwenkbar gelagert. Das Halteteil 6 kann in Befestigungspunkten 7 an der nicht dargestellten Karosserie, welche dem Chassis des Kraftfahrzeugs entspricht, befestigt werden. An einem hinteren Ende ist die Lenkwelle 2 mit dem nicht dargestellten Lenkrad verbindbar. Die von einem Fahrer über das Lenkrad in die Lenkwelle eingebrachte Drehbewegung wird über ein am anderen Ende, dem vorderen Ende, vorgesehenes Kardangelenk und weitere Lenkwellenteile in das nicht dargestellte Lenkgetriebe eingebracht. Alternativ kann das vordere Ende auch mit einem Handmomentensteller gekoppelt sein, beispielsweise bei einem Steer-by-Wire Lenksystem, bei dem keine mechanische Kopplung zwischen dem Lenkrad und den lenkbaren Rädern des Fahrzeugs vorgesehen ist. Zur Erhöhung des Komforts des Fahrers kann die Lenksäule 1 in ihrer Höhe in die Verstellrichtung 101 und in ihrer Länge in die Verstellrichtung 102 verstellt werden. Dazu weist die Lenksäule 1 eine Höhenverstelleinrichtung 201 und eine Längsverstelleinrichtung 202, die jeweils einen Verstellantrieb umfassen. Die Verstellantriebe weisen jeweils einen Elektromotor mit einem Gewindestangenantrieb, auch als Spindelantrieb bezeichnet, auf, welcher eine auf dem Abtrieb des Elektromotors angeordnete Schneckenwelle aufweist, wobei die Schneckenwelle mit einem Schneckenrad in Eingriff steht. Das Schneckenrad ist entweder drehfest mit der Gewindestange (Rotationsspindelantrieb oder auch Drehspindelantrieb genannt) oder drehfest mit einer Spindelmutter (Tauchspindelantrieb) gekoppelt. Diese Verstellantriebskonzepte sind dem Fachmann aus dem Stand der Technik hinreichend bekannt, beispielsweise sei hier auf die Offenbarung in der DE 10 2017 207 561 A1 betreffend der Verstellantriebe hingewiesen.

Die Figuren 1 bis 3 zeigen den Verstellantrieb 111 in Längsrichtung 102. Die Gewindestange 8 ist über einen Anlenkhebel 9 mit dem inneren Mantelrohr 4 verbunden, sodass eine Verschiebung des Anlenkhebels 9 gegenüber dem äußeren Mantelrohr 5 zu einer Verschiebung des inneren Mantelrohrs 4 gegenüber dem äußeren Mantelrohr 5 führt. Die Gewindestange 8 ist an dem Anlenkhebel 9 drehfest gehalten und erstreckt sich in Längsverstellrichtung 102. Die als Gewindespindel ausgebildete Gewindestange 8 steht mit einer Spindelmutter in Eingriff, die in einem Gehäuse 10 des Verstellantriebs drehbar gelagert und ortsfest angeordnet ist. Die Spindelmutter ist an ihrer Außenseite als Schneckenrad ausgebildet, und in dessen Verzahnung die auf der Abtriebswelle eines Elektromotors 11 angeordnete Schneckenwelle eingreift. Durch Rotation der ortsfesten Spindelmutter wird die Gewindestange 8 axial bewegt, wodurch sich das innere Mantelrohr 4 relativ gegenüber dem äußeren Mantelrohr 5 verlagert. Der Verstellantrieb 111 ist als Tauchspindelantrieb ausgebildet. Die Figuren 1 und 3 zeigen die ausgefahrene Stellung der Längsverstelleinrichtung 202 und in der Figur 2 ist die eingefahrene Stellung dargestellt.

Zur Bestimmung der Stellung der Lenksäule bzw. der Position des Lenkrades ist an dem äußeren Mantelrohr 5 ein erstes Element 12 einer Positionssensoreinheit 13 angebracht. Dieses Element 12 der Positionssensoreinheit 13 erstreckt sich in Längsrichtung L bevorzugt über den gesamten Verstellweg der Gewindestange 8, insbesondere die gesamte Länge des äußeren Mantelrohrs 5. Da die Gewindestange 8 der Längsverstelleinrichtung 202 sich nicht dreht, ist ein zweites Element 14 der Positionssensoreinheit 13 an dem anlenkhebelfernen Ende der Gewindestange 8 angebracht.

Die Positionssensoreinheit 13 ist bevorzugt so ausgestaltet, dass sich das zweite Element 14 mit dem inneren Mantelrohr 4 synchron mitbewegt und das erste Element 12 ortsfest an dem äußeren Mantelrohr 5 befestigt ist. Die zwei relativ zueinander verschiebbaren Elemente 12,14 sind bevorzugt Teile eines Linearsensors, der in Abhängigkeit von der Relativposition ein elektrisches Signal erzeugt. In dieser Ausführungsvariante bildet das äußere Mantelrohr 5 die Trageinheit und das innere Mantelrohr 4 die Stelleinheit.

Das erste Element 12 ist dabei vorzugsweise ein Sensor, über den sich das zweite Element 14 in axialer Richtung hinweg bewegt. Das zweite Element 14 kann zumindest teilweise aus einem metallischen Werkstoff gebildet sein. Der Sensor 12 detektiert die Bewegung des zweiten Elements 14 und bestimmt vorzugsweise die absolute Position, so dass auch nach einem Spannungsabfall das Positionssignal weiterhin zur Verfügung steht. Der Sensor umfasst vorzugsweise einen induktiven Linearsensor mit einer Flachspule. Eine Leiterplatine mit Messelektronik mit flacher Messspule ist an der, bei axialer Verstellung ortsfesten Komponente (äußeres Mantelrohr 5 als Trageinheit) befestigt. An der bei axialer Verstellung beweglichen Komponente (inneres Mantelrohr 4 als Stelleinheit) befindet sich eine metallische Komponente. Diese metallische Komponente bewegt sich bei der Verstellung über den Bereich der Flachspule und erzeugt dort eine Veränderung der Induktivität. Diese Abhängigkeit wird genutzt um auf die Position der verstellbaren Komponente zu schließen. Es kann weiters eine Steuereinheit vorgesehen sein, welche die Signale des Sensors verarbeitet und die entsprechende Position berechnet, die dann als Ausgabewert ausgegeben wird und beispielsweise an weitere Steuergeräte oder Fahrzeugassistenzsysteme weitergeleitet wird.

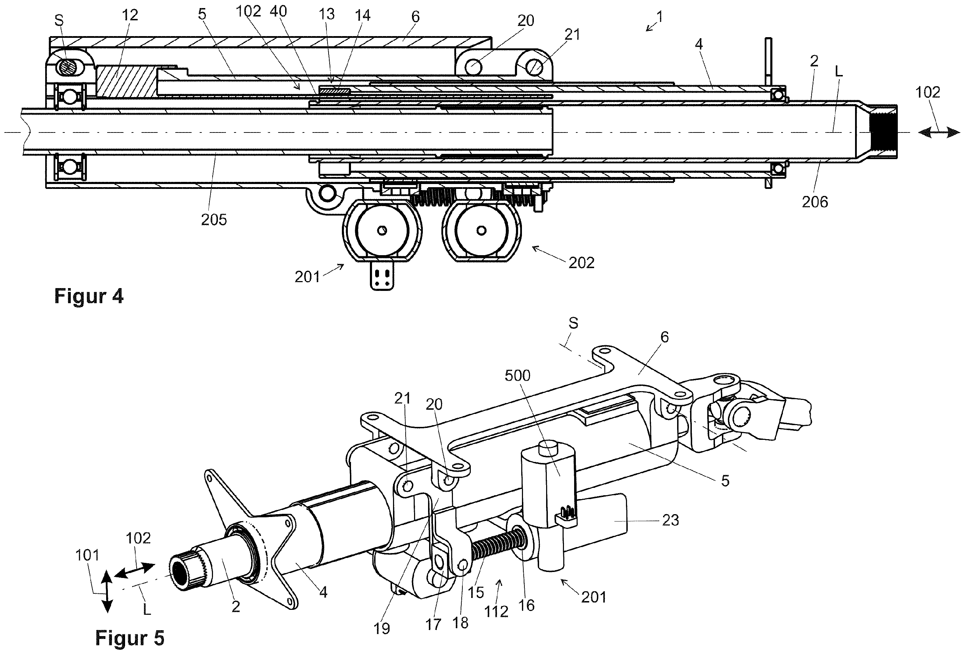

Figur 4 zeigt eine Positionssensoreinheit für eine Längsverstellrichtung 102 die im Inneren der Lenksäule 1 oder genauer ausgedrückt im inneren des äußeren Mantelrohrs 5 angeordnet ist. Das innere Mantelrohr 4 ist teleskopierbar in dem äußeren Mantelrohr 5 aufgenommen. Die Lenkwelle 2 ist teleskopierbar ausgebildet und weist neben einer Innenwelle 205 eine die Innenwelle 205 koaxial teilweise umgebende Außenwelle 206 auf. Das Profil der Außenwelle 206 ist dabei komplementär zu einer Ausnehmung der Innenwelle 205 ausgebildet und erlaubt eine Drehmomentübertragung. Ein erstes, bei der Längsverstellung orstefestes Element 12 der Positionssensoreinheit 13 ist zwischen dem inneren Mantelrohr 4 und der Außenwelle 206 positioniert. Das erste, feststehende Element 12 erstreckt sich in Längsrichtung bevorzugt über den Verstellweg der Längsverstellung, und insbesondere über mindestens 50% der Länge des äußeren Mantelrohrs, bevorzugt über mindestens 80% und ganz besonders bevorzugt über den gesamten Verstellweg. Ein zweites, in Längsrichtung bewegliches Element 14 ist an dem inneren Mantelrohr 4 befestigt. Bei einer Verstellung in Längsrichtung in Richtung der Längsachse L bewegt sich das zweite bewegliche Element 14 der Positionssensoreinheit 13 über das erste Element 12 parallel zur Längsachse hinweg. Bevorzugt ist das zweite bewegliche Element 14 auf einer Innenseite des inneren Mantelrohrs 4, insbesondere an einem innenliegenden Ende 40, angeordnet. In dieser Ausführungsform der Figur 4 bildet das äußere Mantelrohr 5 die Trageinheit und das innere Mantelrohr 4 die Stelleinheit.

Figur 5 zeigt eine Höhenverstelleinrichtung 201 mit einem Verstellantrieb 112. Ein Elektromotor 500 des Verstellantriebs 112 treibt die Verstellbewegung des äußeren Mantelrohrs 5 gegenüber dem als Konsole ausgebildeten Halteteil 6 in Höhenverstellrichtung 101 an. Eine als Gewindespindel ausgebildete Gewindestange 15 steht mit einer Spindelmutter 16 in Eingriff, wobei die Spindelmutter 16 an ihrer Außenseite als Schneckenrad ausgebildet ist, und in dessen Verzahnung eine auf einer Abtriebswelle des Elektromotors 500 angeordnete Schneckenwelle eingreift. Über die Verdrehung des Schneckenrads wird die Spindelmutter 16 in Rotation versetzt. Die Gewindestange 15 greift in die Spindelmutter 16 ein, wobei durch die Rotation der Spindelmutter 16 die Gewindespindel 15 auf Grund des korrespondierenden Gewindes der Gewindestange 15 und der Spindelmutter 16 translatorisch relativ zur Spindelmutter 16 bewegt wird. Dieser Verstellantrieb ist somit ebenfalls als Tauchspindelantrieb ausgebildet. Die Gewindestange 15 ist mit einem Koppelstück 17 drehfest gekoppelt. Dieses Koppelstück 17 ist über ein Gelenk 18 mit einem Stellhebel 19 verbunden, wobei das Koppelstück 17 drehfest gegenüber der Gewindestange 15 gehalten ist. Der Stellhebel 19 ist verschwenkbar in einer Gelenkachse 20 am Halteteil 6 und in einer Gelenkachse 21 an dem äußeren Mantelrohr 5 gehalten. Dadurch wird erreicht, dass über das Koppelstück 17 und die Gewindestange 15 eine Verschwenkung um eine Schwenkachse S des äußeren Mantelrohrs 5 gegenüber dem Halteteil 6 erfolgt. Somit wird in dieser Ausführungsform der Figur 5 die Trageinheit durch das Halteteil 6 und die Stelleinheit durch das äußere Mantelrohr 5 gebildet. Dieser Verstellantrieb für die Höhenverstellung ist somit als Tauchspindelantrieb ausgebildet. Alternativ ist es ebenfalls denkbar und möglich die Höhenverstellung mit einem Rotationsspindelantrieb zu realisieren. Der Verstellantrieb 112 ist verschwenkbar an dem äußeren Mantelrohr 5 gehalten. Es ist eine Positionssensoreinheit 22 vorgesehen, die die Bewegung der Gewindestange 15 detektiert und aus dem gemessenen Signal eine Position der Lenksäule in Höhenverstellrichtung 101 bestimmt.

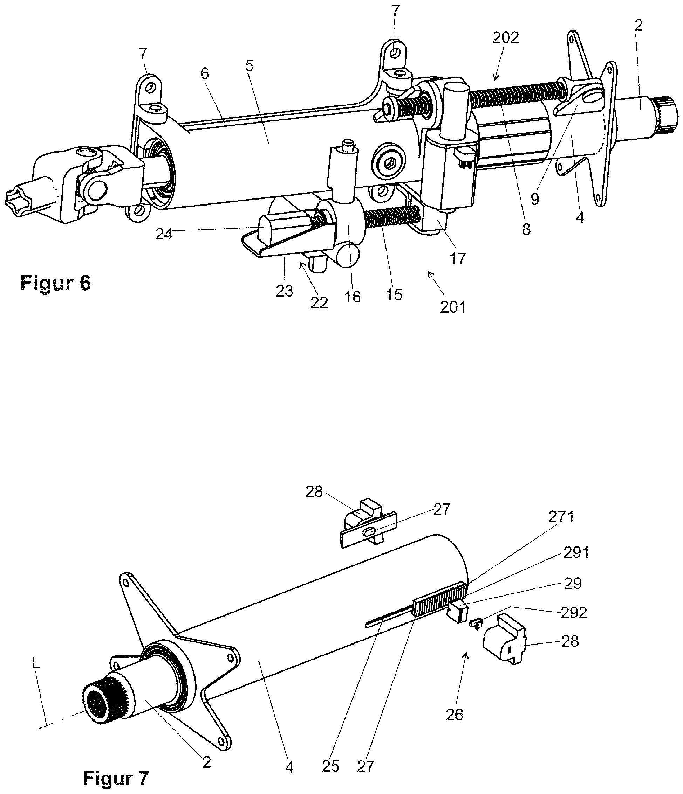

Figur 6 zeigt im Detail die Positionssensoreinheit 22 der Höhenverstellung. Ausgehend von dem Schneckenrad ist die Gewindestange 15 auf einer ersten Seite von der zweiten Spindelmutter 17 und auf einer zweiten Seite von einem zweiten Element 24 der Positionssensoreinheit 22 umgeben. Das zweite Element 24 der Positionssensoreinheit 22 bewegt sich mit dem Ende der Gewindestange 15 mit. Ein erstes Element 23 der Positionssensoreinheit 22 umgibt das zweite Element 24 zumindest teilweise und ist als U-förmiges Profil ausgebildet. Das erste Element 23 der Positionssensoreinheit 22 erstreckt sich parallel zur Längsrichtung der Gewindestange über den Verstellweg der Höhenverstelleinrichtung. Neben der Höhenverstelleinrichtung 202 weist die Lenksäule auch eine Längsverstelleinrichtung 201 auf.

Den zuvor beschriebenen Ausführungsbeispielen ist gemein, dass die Positionserkennungsvorrichtungen mit Hilfe der Positionssensoreinheiten die relative Position der Außenwelle oder des Mantelrohrs bzw. Stelleinheit gegenüber einem Halteteil bzw. der Trageinheit erfasst. Bevorzugt ist der Sensor der Positionssensoreinheiten als berührungsloser Sensor ausgeführt. Vorzugsweise ist der Sensor als Linearsensor ausgebildet. Besonders bevorzugt ist der Sensor als Absolutsensor ausgebildet. Der Sensor kann vorzugsweise als induktiver, magnetischer, optischer, akustischer oder kapazitiver Sensor ausgebildet sein. Es werden allgemein zwei unabhängige Sensoren vorgesehen, um ein redundantes System zu schaffen, wodurch die Sicherheit erhöht wird. Bevorzugt weisen diese zwei Sensoren unterschiedliche Messmethoden auf.

Bevorzugt sind ein Sensor zur Ermittlung der Längsverstellposition und/oder ein Sensor zur Ermittlung der Höhenverstellposition vorgesehen.

Aus dem Positionssignal lässt sich auch die Verstellgeschwindigkeit berechnen. Bei verstaubaren Lenksäulen besteht aufgrund der größeren Verstellwege beim Verstellen die Gefahr, dass der Fahrer bzw. ein Hindernis die Verstellung blockiert und dadurch verletzt oder beschädigt wird. Hindernisse im Verstellweg der Lenksäule resultieren in einem Abfall der Verstellgeschwindigkeit, die mit der Positionserkennungsvorrichtung erfasst werden kann. Die Signalerfassung erfolgt somit direkt an der Verstelleinrichtung und nicht indirekt über ein Getriebe am Verstellmotor. Wird ein Abfall der Verstellgeschwindigkeit und das Unterschreiten eines Grenzwertes der Verstellgeschwindigkeit detektiert, wird vorzugsweise die Verstellung gestoppt. Somit kann auf eine einfache und wirksame Weise eine Kollision bei der Verstellung ermittelt und ein Schaden verhindert werden.

Die Figur 7 zeigt ein inneres Mantelrohr 4 einer Lenksäule mit zwei Langlöchern 25, die parallel zur Längsrichtung L und in Umfangsrichtung auf gegenüberliegenden Seiten des inneren Mantelrohrs 4 angeordnet sind. Die Langlöcher 25 sind Teil einer Energieabsorptionsvorrichtung 26. In die Langlöchern 25 reicht jeweils ein ortsfest gehaltener Gleitstein 27 hinein, dessen Breite größer ist als die Weite der Langlöcher 25, welche daher bei einer Verschiebung gegenüber den Gleitsteinen 27 aufgeweitet werden. Der Gleitstein 27 weist auf der dem Langloch 25 abgewandten Seite eine Verzahnung 271 auf. Der Gleitstein 27 ist mit einer Aktivierungseinheit 28 über ein Arretierelement 29 mit einer zur Verzahnung 271 korrespondierenden Verzahnung 291 verbunden. Ist die Energieabsorptionsvorrichtung 26 aktiv und kommt es zu einer Bewegung des inneren Mantelrohrs 4 in Längsrichtung L, wird durch die Bewegung des Gleitsteins 27 im Langloch 25 eine Deformation des inneren Mantelrohrs 4 hervorgerufen, wodurch ein Teil der eingetragenen Energie absorbiert wird, also in Verformungsarbeit und Wärme umgewandelt wird. Die Aktivierungseinheit 28 umfasst einen pyroelektrischen Schalter, welcher zur Aktivierung bzw. Inbetriebsetzung der Energieabsorptionsvorrichtung 26 gezündet wird, wodurch die Bewegung des Arretierelements 29 freigegeben wird und das Arretierelement 29 mittels der vorgespannten Feder 292 in eine Eingriffsposition überführt wird, so dass die Verzahnung 291 des Arretierelements 29 mit der Verzahnung 271 des Gleitsteins 27 in Eingriff gebracht wird.

Das innere Mantelrohr 4 ist Teil einer Lenksäule, die eine Höhen- und/oder Längsverstellung aufweist. Eine zuvor beschriebene Positionserkennungsvorrichtung detektiert die Stellung der Lenksäule bzw. die Stellung der Stelleinheit relativ zur Trageinheit. In Abhängigkeit von der Stellung der Lenksäule wird die Energieabsorptionseinrichtung angesteuert. Bevorzugt kann zur Aktivierung der Energieabsorptionseinrichtungen ein Pyroschalter oder ein Hubmagnet zum Einsatz kommen. Es können mindestens zwei Energieabsorptionseinrichtungen vorgesehen sein, wie dies in der Figur 7 dargestellt ist, wobei im Crashfall die Position der Stelleinheit bzw. der Außenwelle 206 in Bezug auf das Halteteil (Trageinheit) bestimmt wird und entsprechend dieser Position mittels einer Steuereinheit zumindest eine der Energieabsorptionseinrichtungen in Betrieb gesetzt wird.

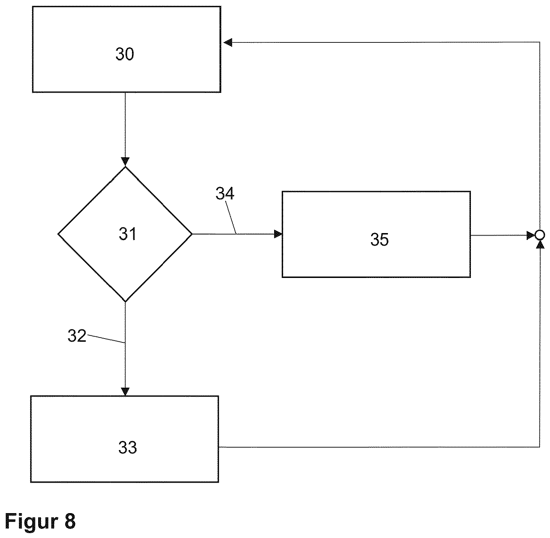

Figur 8 zeigt ein Flussdiagramm bei dem in Abhängigkeit von der Position bzw. Stellung einer Lenksäule das Energiemanagement angepasst wird, mit anderen Worten die Energieabsorptionseinrichtung bzw. Energieabsorptionsvorrichtung wird in Abhängigkeit der Position der Stelleinheit in Bezug auf die Trageinheit angesteuert. Bei der Lenksäule kann es sich bevorzugt um eine verstaubare Lenksäule, die bevorzugt in autonom fahrenden Kraftfahrzeugen zum Einsatz kommt, handeln, jedoch ist das erfindungsgemäße Verfahren nicht darauf beschränkt. Die verstaubare Lenksäule lässt sich in einem autonomen Fahrmodus komplett einfahren bzw. in eine verstaute Position bringen, so dass das Lenkrad im Innenraum für den Fahrer nicht störend ist. Der Fahrer erhält mehr Platz für andere Aktivitäten.

Eine solche verstaubare Lenksäule weist daher einen deutlich größeren Verstellweg gegenüber einer herkömmlichen Verstellung zur Erhöhung des manuellen Fahrkomforts auf. Je nachdem wo sich das Lenkrad befindet und welche Position die Lenksäule einnimmt, sind andere Voraussetzung für beispielsweise eine Energieabsorptionseinrichtung an der Lenksäule und in das Lenkrad integrierte Airbagsysteme gegeben. Um den Fahrer in einem autonomen Fahrmodus und in einem manuellen Fahrmodus zu schützen, bedarf es spezifischen Airbagsystemen, welche den Fahrer sowohl mit eingefahrenem als auch mit ausgefahrenem Lenkrad optimal schützen. Das Energiemanagement der Lenksäule wird daher bevorzugt an die Position der Lenksäule angepasst, um den unterschiedlichen Voraussetzungen Rechnung zu tragen. Es kann vorgesehen sein, in Abhängigkeit von der Lenkradposition verschiedene Airbagsysteme zu aktivieren.

In einem ersten Schritt misst die zuvor beschriebene Positionserkennungsvorrichtung die Position der Lenksäule in Höhenverstellrichtung und/oder Längsverstellrichtung 30 mittels Positionssensoreinheiten. Diese Information wird verwendet, um festzustellen, ob sich die Lenksäule in einem Fahrer-Modus befindet 31, d. h. der Fahrer kann das Lenkrad zum Steuern des Fahrzeugs in einem manuellen oder halbautonomen Fahrmodus umgreifen und einen Lenkbefehl einleiten. Die Position entspricht dabei einer Komfortposition für den Fahrer und umfasst gerade nicht verstaute Positionen, in der das Lenkrad nur schwer zu bedienen ist.

Ist eine Fahrer-Modus-Position gegeben 32, wird eine herkömmliche Einstellung der Energieabsorptionseinrichtungen (z. B. Energieabsorptionseinrichtung an der Lenksäule, Airbags und dergleichen) gewählt, die der Einstellung eines manuell und/oder halbautonom fahrenden Fahrzeugs entspricht 33. Befindet sich die Lenksäule hingegen in einer verstauten Position 34, werden die Energieabsorptionseinrichtungen entsprechend an die Situation angepasst und eine für den Crashfall optimale Einstellung 35 gewählt. Dabei ist es denkbar, dass es mehrere Energieabsorptionseinrichtungen an der Lenksäule gibt, die dann je nach Position der Lenksäule, angesprochen werden und in Betrieb oder außer Betrieb gesetzt werden.

Um für die unterschiedlichen Lenkradpositionen spezifische Airbagsysteme zu aktivieren, muss die Steuereinheit des Fahrzeugs stets mit Informationssignalen versorgt werden, in welcher Position sich das Lenkrad bzw. die Lenksäule, oder genauer ausgedrückt die Stelleinheit relativ zur Trageinheit befindet. Für die Lenksäule bedeutet dies, dass zumindest die Position der Längenverstellung sicher erfasst und an das Fahrzeug gesendet werden kann. Die Positionserfassung fällt aufgrund der sicherheitsabhängigen Funktion unter die Klassifizierung der funktionalen Sicherheit (ASIL). Auch nach einem kurzzeitigen Stromausfall, muss das System die genaue Position der Lenksäule erfassen können, ohne über einen Initialisierungsvorgang die Endanschläge anzufahren. Die Positionssensoreinheiten umfassen daher bevorzugt jeweils einen absoluten Sensor, der die Position zu jeder Zeit sicher erfassen und wiedergeben kann.

## Patentansprüche

1. Lenksäule (1) für ein Kraftfahrzeug, umfassend eine mit dem Chassis des Kraftfahrzeugs verbindbare Trageinheit und eine an dieser gehaltenen Stelleinheit, welche eine Lenkwelle (2) drehbar lagert, wobei die Position der Stelleinheit gegenüber der Trageinheit verstellbar ist, wobei
die Lenksäule (1) eine Positionserkennungsvorrichtung zur Ermittlung der Position der Stelleinheit relativ zur Trageinheit aufweist, **dadurch gekennzeichnet, dass**
die Positionserkennungsvorrichtung ein redundantes System ist, das zwei voneinander unabhängige Positionssensoreinheiten (13, 22) zur Messung der Position der Lenksäule aufweist.

2. Lenksäule nach Anspruch 1, **dadurch gekennzeichnet, dass** die Positionserkennungsvorrichtung wenigstens eine Positionssensoreinheit (13, 22) umfasst, die ein erstes Element (12, 23) und ein damit zusammenwirkendes zweites Element (14, 24) aufweist, wobei sich das erste Element (12, 23) gegenüber dem zweiten Element (14, 24) bei Verstellung der Stelleinheit gegenüber der Trageinheit bewegt.

3. Lenksäule nach einem der vorhergehenden Ansprüche, **dadurch gekennzeichnet, dass** das erste Elemente (12, 23) und das zweite Element (14, 24) relativ zueinander linear verschiebbar geführt sind.

4. Lenksäule nach einem der vorhergehenden Ansprüche, **dadurch gekennzeichnet, dass** die Positionssensoreinheit (13, 22) einen berührungslosen Sensor umfasst.

5. Lenksäule nach einem der vorhergehenden Ansprüche, **dadurch gekennzeichnet, dass** die Lenksäule einen Verstellantrieb zur Verstellung der Stelleinheit relativ zur Trageinheit in eine Längsverstellrichtung (102) und/oder einen Verstellantrieb zur Verstellung der Stelleinheit relativ zur Trageinheit in Höhenverstellrichtung (101) aufweist, wobei der Verstellantrieb (111, 112) eine Gewindestange (8, 15) mit einem Außengewinde aufweist, welches mit einem Innengewinde einer Spindelmutter (10, 16) des Verstellantriebs (111, 112) in Eingriff steht.

6. Lenksäule nach einem der vorhergehenden Ansprüche, **dadurch gekennzeichnet, dass** die Positionssensoreinheit (13, 22) einen Linearsensor zur Erzeugung eines elektrischen Steuersignals in Abhängigkeit von der Relativposition des ersten Elements (12, 23) relativ zum zweiten Element (14, 24) aufweist.

7. Lenksäule nach einem der vorhergehenden Ansprüche, **dadurch gekennzeichnet, dass** die Positionssensoreinheit (13, 22) einen Absolutsensor umfasst.

8. Lenksäule nach einem der vorhergehenden Ansprüche, **dadurch gekennzeichnet, dass** die beiden redundanten Positionssensoreinheiten (13, 22) unterschiedliche Messmethoden aufweisen.

9. Verfahren zum Betreiben einer Lenksäule (1), wobei die Lenksäule nach einem der Ansprüche 1 bis 8 ausgebildet ist, und wobei das Verfahren folgende Verfahrensschritte umfasst:
- Ermitteln einer Position der Stelleinheit relativ zur Trageinheit mittels der Positionserkennungsvorrichtung;
- Berechnen einer Verstellgeschwindigkeit aus dem ermittelten Positionssignal; und
- Wenn die Verstellgeschwindigkeit einen vorgegeben Grenzwert unterschreitet, Stoppen der Verstellung der Lenksäule.

10. Verfahren nach Anspruch 9, **dadurch gekennzeichnet, dass** das Verfahren folgende weitere Verfahrensschritte umfasst:
• Bestimmen einer Bestromung des ersten und/oder zweiten Verstellantriebs,
• Überprüfen ob ein vorbestimmter Grenzwert der Bestromung überschritten ist,
• Bei Überschreiten des Grenzwertes, Stoppen der Verstellung der Lenksäule.

11. Verfahren zum Betreiben einer Lenksäule (1), wobei die Lenksäule nach einem der Ansprüche 1 bis 8 ausgebildet ist, und wobei die Lenksäule (1) zudem ein Crashsystem mit wenigstens zwei an der Lenksäule (1) angeordneten Energieabsorptionseinrichtungen (26) aufweist, und wobei das Verfahren folgende Verfahrensschritte umfasst:
• Ermitteln einer Position der Stelleinheit relativ zur Trageinheit mittels der Positionserkennungsvorrichtung im Crashfall;
• Steuern der wenigstens zwei an der Lenksäule (1) angeordneten Energieabsorptionseinrichtungen (26) in Abhängigkeit von der ermittelten Position, wobei zumindest eine der Energieabsorptionseinrichtungen (26) in Betrieb gesetzt wird.

12. Verfahren nach Anspruch 11, **dadurch gekennzeichnet, dass** die Lenksäule (1) zur Aktivierung der wenigstens zwei Energieabsorptionseinrichtungen (26) einen Pyroschalter oder einen Hubmagneten aufweist.

13. Verfahren zum Betreiben einer Lenksäule (1), wobei die Lenksäule nach einem der Ansprüche 1 bis 8 ausgebildet ist, wobei die Lenksäule (1) verstaubar ist, und wobei die Lenksäule (1) zudem ein Crashsystem mit einem Airbagsystem aufweist, und wobei das Verfahren folgende Verfahrensschritte umfasst:
• Ermitteln einer Position der Stelleinheit relativ zur Trageinheit mittels der Positionserkennungsvorrichtung im Crashfall;
• Steuern des Airbagsystems in Abhängigkeit von der ermittelten Position.

14. Verfahren nach Anspruch 13, **dadurch gekennzeichnet, dass** das Airbagsystem dazu ausgelegt ist, einen Fahrer im Crashfall in einem autonomen Fahrmodus mit verstauter Lenksäule (1) und in einem manuellen oder halbautonomen Fahrmodus zu schützen, wobei das Verfahren folgende weitere Schritte umfasst:
• Erkennen, dass die Lenksäule (1) verstaut ist;
• Steuern des Airbagsystems angepasst an die verstaute Lenksäule (1).

## Claims

1. Steering column (1) for a motor vehicle, comprising a supporting unit that can be connected to the chassis of the motor vehicle and an actuating unit, which is mounted on the supporting unit and which supports a steering shaft (2) for rotation, wherein the position of the actuating unit can be adjusted relative to the supporting unit, wherein the steering column (1) has a position detection device for determining the position of the actuating unit relative to the supporting unit, **characterized in that** the position detection device is a redundant system having two mutually independent position sensor units (13, 22) for measuring the position of the steering column.

2. The steering column as claimed in claim 1, **characterized in that** the position detection device comprises at least one position sensor unit (13, 22) which has a first element (12, 23) and a second element (14, 24) interacting therewith, wherein the first element (12, 23) moves relative to the second element (14, 24) during adjustment of the actuating unit relative to the supporting unit.

3. The steering column as claimed in any one of the preceding claims, **characterized in that** the first elements (12, 23) and the second element (14, 24) are linearly movable relative to each other.

4. The steering column as claimed in any one of the preceding claims, **characterized in that** the position sensor unit (13, 22) comprises a contactless sensor.

5. The steering column as claimed in one of the preceding claims, **characterized in that** the steering column has an adjustment drive for adjusting the actuating unit relative to the supporting unit in a length adjustment direction (102) and/or an adjustment drive for adjusting the actuating unit relative to the supporting unit in a height adjustment direction (101), wherein the adjustment drive (111, 112) has a threaded rod (8, 15) with an external thread, which engages an internal thread of a spindle nut (10, 16) of the adjustment drive (111, 112).

6. The steering column as claimed in any one of the preceding claims, **characterized in that** the position sensor unit (13, 22) has a linear sensor for producing an electrical control signal depending on the relative position of the first element (12, 23) relative to the second element (14, 24).

7. The steering column as claimed in any one of the preceding claims, **characterized in that** the position sensor unit (13, 22) comprises an absolute sensor.

8. The steering column as claimed in one of the preceding claims, **characterized in that** the two redundant position sensor units (13, 22) have different measuring methods.

9. A method for operating a steering column (1), the steering column (1) being constructed according to one of claims 1 to 8, the method comprising the following procedure steps:
- determining a position of the actuating unit relative to the supporting unit by means of the position detection device;
- calculating an adjustment speed from the determined position signal; and
- if the adjustment speed falls below a predetermined limit value, stopping the adjustment of the steering column.

10. The method as claimed in claim 9, **characterized in that** the method includes the following further procedure steps:
• determining an energization of the first and/or second adjustment drive,
• checking whether a predetermined limit of the energization is exceeded,
• if the limit value is exceeded, stopping the adjustment of the steering column.

11. A method for operating a steering column (1), the steering column (1) being constructed according to one of claims 1 to 8, and said steering column (1) comprising a crash system with at least two energy absorption devices (26) arranged on the steering column (1), wherein the method includes the following procedure steps:
• determining a position of the actuating unit relative to the supporting unit by means of the position detection device in the event of a crash;
• controlling the at least two energy absorption devices (26) arranged on the steering column (1) depending on the determined position, wherein at least one of the energy absorption devices (26) is put into operation.

12. The method as claimed in claim 11, **characterized in that** the steering column (1) has a pyro switch or a lifting magnet for activating the at least two energy absorption devices (26).

13. A method for operating a steering column (1), the steering column (1) being constructed according to one of claims 1 to 8, wherein the steering column (1) is stowable, and wherein the steering column (1) has a crash system with an airbag system, wherein the method comprises the following procedure steps:
• determining a position of the actuating unit relative to the supporting unit by means of the position detection device in the event of a crash;
• controlling the airbag system depending on the determined position.

14. The method as claimed in claim 13 , **characterized in that** the airbag system is designed to protect a driver in the event of a crash in an autonomous driving mode with a stowed steering column (1) and in a manual or semi-autonomous driving mode, wherein the method comprises the following further steps:
• detecting that the steering column (1) is stowed;
• controlling the airbag system adapted to the stowed steering column (1).

## Revendications

1. Colonne de direction (1) pour un véhicule automobile, comprenant une unité de support qui peut être reliée au châssis du véhicule automobile et une unité d'actionnement, qui est montée sur l'unité de support et qui supporte un arbre de direction (2) pour la rotation, dans laquelle la position de l'unité d'actionnement peut être ajustée par rapport à l'unité de support, dans laquelle la colonne de direction (1) a un dispositif de détection de position pour déterminer la position de l'unité d'actionnement par rapport à l'unité de support, **caractérisée en ce que** le dispositif de détection de position est un système redondant ayant deux unités de capteurs de position (13, 22) mutuellement indépendantes pour mesurer la position de la colonne de direction.

2. Colonne de direction selon la revendication 1, **caractérisée par le fait que** le dispositif de détection de position comprend au moins une unité de capteur de position (13, 22) comportant un premier élément (12, 23) et un second élément (14, 24) qui interagissent avec elle, le premier élément (12, 23) se déplaçant par rapport au second élément (14, 24) lors du réglage de l'unité d'actionnement par rapport à l'unité de support.

3. Colonne de direction selon l'une des revendications précédentes, **caractérisée par le fait que** les premiers éléments (12, 23) et le second élément (14, 24) sont mobiles linéairement l'un par rapport à l'autre.

4. Colonne de direction selon l'une des revendications précédentes, **caractérisée par le fait que** l'unité de capteur de position (13, 22) comprend un capteur sans contact.

5. La colonne de direction selon l'une des revendications précédentes, **caractérisée en ce que** la colonne de direction a un dispositif de réglage pour ajuster l'unité d'actionnement par rapport à l'unité de support dans une direction de réglage de la longueur (102) et/ou un dispositif de réglage pour ajuster l'unité d'actionnement par rapport à l'unité de support dans une direction de réglage de la hauteur (101), dans lequel le dispositif de réglage (111, 112) a une tige filetée (8, 15) avec un filetage extérieur, qui s'engage dans un filetage intérieur d'un écrou de broche (10, 16) du dispositif de réglage (111, 112).

6. Colonne de direction selon l'une des revendications précédentes, **caractérisée en ce que** l'unité de capteur de position (13, 22) comporte un capteur linéaire pour produire un signal de commande électrique en fonction de la position relative du premier élément (12, 23) par rapport au second élément (14, 24).

7. Colonne de direction selon l'une des revendications précédentes, **caractérisée par le fait que** l'unité de capteur de position (13, 22) comprend un capteur absolu.

8. Colonne de direction selon l'une des revendications précédentes, **caractérisée par le fait que** les deux unités redondantes de capteurs de position (13, 22) ont des méthodes de mesure différentes.

9. Procédé de fonctionnement d'une colonne de direction (1), la colonne de direction (1) étant construite selon l'une des revendications 1 à 8, le procédé comprenant les étapes suivantes :
- déterminer une position de l'unité d'actionnement par rapport à l'unité de support au moyen du dispositif de détection de position ;
- calculer une vitesse d'ajustement à partir du signal de position déterminé ; et
- si la vitesse de réglage est inférieure à une valeur limite prédéterminée, arrêter le réglage de la colonne de direction.

10. Méthode selon la revendication 9, **caractérisée par le fait que** la méthode comprend les étapes suivantes de la procédure :
• déterminer la mise sous tension de la première et/ou de la deuxième commande d'ajustement,
• vérifier si une limite prédéterminée de l'excitation est dépassée,
• en cas de dépassement de la valeur limite, arrêt du réglage de la colonne de direction.

11. Méthode d'utilisation d'une colonne de direction (1), la colonne de direction (1) étant construite selon l'une des revendications 1 à 8, et ladite colonne de direction (1) comprenant un système de collision avec au moins deux dispositifs d'absorption d'énergie (26) disposés sur la colonne de direction (1), dans laquelle la méthode comprend les étapes suivantes de la procédure :
• déterminer une position de l'unité d'actionnement par rapport à l'unité de support au moyen du dispositif de détection de position en cas de collision ;
• commander les au moins deux dispositifs d'absorption d'énergie (26) disposés sur la colonne de direction (1) en fonction de la position déterminée, l'un au moins des dispositifs d'absorption d'énergie (26) étant mis en service.

12. Méthode selon la revendication 11, **caractérisée par le fait que** la colonne de direction (1) est équipée d'un interrupteur pyrotechnique ou d'un aimant de levage pour activer les au moins deux dispositifs d'absorption d'énergie (26).

13. Méthode d'utilisation d'une colonne de direction (1), la colonne de direction (1) étant construite selon l'une des revendications 1 à 8, dans laquelle la colonne de direction (1) peut être rangée, et dans laquelle la colonne de direction (1) possède un système de crash avec un système d'airbag, dans laquelle la méthode comprend les étapes suivantes de la procédure :
• déterminer une position de l'unité d'actionnement par rapport à l'unité de support au moyen du dispositif de détection de position en cas de collision ;
• contrôler le système d'airbag en fonction de la position déterminée.

14. Méthode selon la revendication 13, **caractérisée par le fait que** le système d'airbags est conçu pour protéger un conducteur en cas de collision dans un mode de conduite autonome avec une colonne de direction (1) rangée et dans un mode de conduite manuelle ou semi-autonome, dans laquelle la méthode comprend les étapes supplémentaires suivantes :
• détecter que la colonne de direction (1) est rangée ;
• commander le système de coussins gonflables adapté à la colonne de direction (1) rangée.
